# EUROPEAN PATENT APPLICATION

(11) **EP 2 680 573 A2**
(43) Date of publication of application: **01.01.2014**
(21) Application number: 13167718.9
(22) Date of filing: 14.05.2013
(51) Int. Cl.: H04N 5/64

(54) **Display apparatus and board usable therein**

(30) Priority: 28.06.2012 KR 20120070066
(71) Applicant: Samsung Electronics Co., Ltd, Gyeonggi-do 443-742 (KR)
(72) Inventor: Kim, Hyun-woo, Gyeonggi-do (KR); Jung, Chang-joo, Gyeonggi-do (KR)
(74) Representative: Taor, Simon Edward William

(57) **Abstract**

A display apparatus including a user input and an infrared module which are structurally separated is provided. The display apparatus includes an image processor which processes an image signal, a display which displays the processed image thereon, a remote control receiver which receives a user's command, a user input which receives a user's selection, a controller which controls the image processor, the display, the remote control receiver and the user input. The controller and the user input are provided in the same board, and the remote control receiver is connected through a connector to the board in which the controller is provided.

## Description

Apparatuses and methods consistent with the exemplary embodiments relate to a display apparatus and a board which is usable therein. More particularly, the exemplary embodiments relate to a user input and an infrared (IR) module which are structurally separated.

A display apparatus processes image signals/image data which are supplied by various image supply sources or are stored therein, and displays an image on a display panel based on the processed image signals/image data. The display apparatus may be implemented as a TV.

To perform a function which corresponds to a user's command, the display apparatus includes a remote control receiver which receives a user command from a remote distance, i.e., an infrared (IR) module and a user input provided in the display apparatus, i.e., a function module.

The IR module and the function module which receive the user command have been integrated into a printed circuit board (PCB) or by employing respective PCBs which are connected by harnesses.

However, such structural connection between the modules brings about limitations in design, increases the number of parts, such as PCBs and harness and material costs, and reduces productivity and efficiency of assembly.

Accordingly, one or more exemplary embodiments provide a display apparatus which enables an IR module and a function module to be separated from each other and provides the function module in a main board of the display apparatus to thereby reduce additional PCB or harness requirements and improve productivity as a result of reducing the number of parts and the cost of the material.

Another exemplary embodiment is to provide a display apparatus which enables an IR module to be provided as a smaller board by separating the IR module and a function module, and provides the IR module in any desired location without limitation, which is caused by the connection with the function module.

The foregoing and/or other aspects may be achieved by providing a display apparatus including: an image processor which processes an image signal; a display which displays the processed image thereon; a remote control receiver which receives a user command from a remote distance; a user input which receives a user's selection; a controller which controls the image processor, the display, the remote control receiver and the user input, and the controller and the user input are provided in the same board, and the remote control receiver is connected through a connector to the board in which the controller is provided.

Also, the display apparatus may further include a main body frame in which an opening is formed, and a first end of the user input is attached to the board and a second end thereof is exposed to the outside of the main body frame through the opening.

Also, the user input may include a user manipulation button, and a central axis of the user manipulation button is perpendicular to the board.

Also, the remote control receiver may include at least one of an infrared (IR) receiver, a light emitting diode (LED) and an eco sensor.

The foregoing and/or other aspects may be achieved by providing a board which is usable in a display apparatus including: a user input which receives a user's selection; a connector which is connected to a remote control receiver which receives a user's command from a remote distance; and a controller which processes and displays an image signal, and performs a control operation which corresponds to a user's input selection and a user's command transmitted through the remote control receiver.

Also, the user input may include a user manipulation button, and a central axis of the user manipulation button may be perpendicular to the board.

Also, the user manipulation button may include at least one of a channel up/down, volume up/down, menu selection and mode selection functions. The above and/or other aspects will become apparent and more readily appreciated from the following description of the exemplary embodiments, taken in conjunction with the accompanying drawings, in which:
FIG. 1 is a block diagram of a display apparatus, according to an exemplary embodiment;
FIG. 2 is a block diagram of a board which is usable in the display apparatus, according to an exemplary embodiment;
FIG. 3 is a view of a rear surface of the display apparatus, according to an exemplary embodiment;

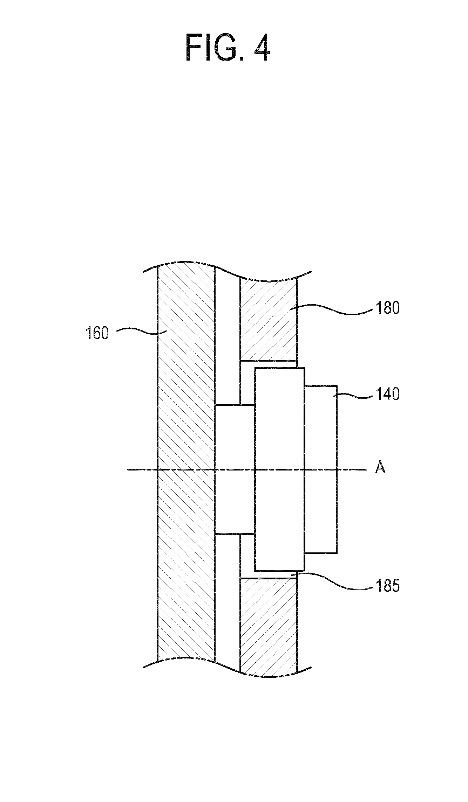

FIG. 4 is a sectional view of a board and a frame according to an exemplary embodiment; and
FIG. 5 is a front view of a user input according to an exemplary embodiment.

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

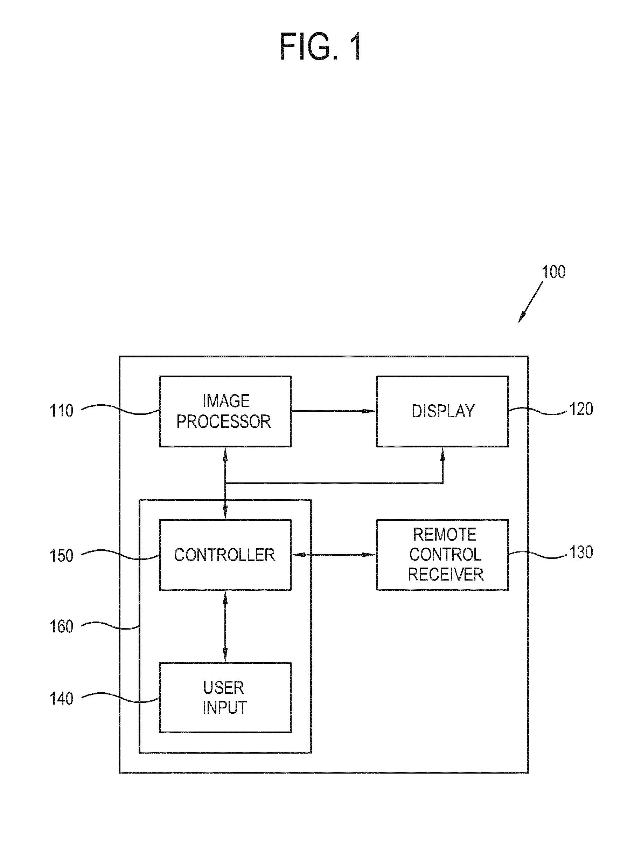

As shown in FIG. 1, a display apparatus 100 includes a signal input/output (not shown) which inputs/outputs at least one image signal, an image processor 110 to which processes an image signal transmitted by the signal input/output, a display 120 which displays an image thereon based on the image signal processed by the image processor 110, a storage (not shown) which stores data/information therein, a remote control receiver 130 which receives a user command from a remote distance, a user input 140 to receive a user's input, a controller 150 which controls overall operations of the display apparatus 100 and a board 160 in which the user input 140 and the controller 150 are mounted.

The signal input/output transmits the received image signal to the image processor 110. The signal input/output varies depending on a standard of a received signal or an exemplary embodiment type of image supply source or the display apparatus 100. For example, the signal input/output may receive signals/data according to the high definition multimedia interface (HDMI), universal serial bus (USB) and Component and may include a plurality of connection terminals (not shown) which correspond to the foregoing standards.

The image processor 110 processes an image signal, which is transmitted by the signal input/output, and an image signal supplied by an image supply source, according to various preset image processing operations. The image processor 110 outputs the processed image signal to the display 130 to thereby display an image on the display 130, based on the processed image signal.

The image processing operation of the image processor 110 may include a demultiplexing operation which divides a predetermined signal, a decoding operation which corresponds to an image format of an image signal, a de-interlacing operation which converts an interlace image signal into a progressive image signal, a scaling operation which adjusts an image signal to a preset resolution, a noise reduction operation which improves the quality as an image, a detail enhancement operation, a frame refresh rate conversion operation, etc., but is not limited thereto.

The display 120 displays an image thereon based on an image signal which is output by the image processor 110. The display 120 may be implemented by various display panels including liquid crystal, plasma, light-emitting diode (LED), organic light-emitting diode (OLED), surface-conduction electron-emitter, carbon nano-tube, and nano-crystals, but is not limited thereto.

The storage stores unlimited data therein according to a control by controller 150. The storage is implemented as a non-volatile memory such as a flash memory or as a hard disc drive. The storage is accessed by the controller 150, which reads/records/modifies/deletes/updates data stored in the storage.

The data which are stored in the storage include an operating system (OS) for driving the display apparatus 100, and various applications which are executed on the OS, and image data, additional data and setting information.

The storage may be mounted in the board 160 (to be described later); together with the controller 150 and the user input 140.

The remote control receiver 130 receives a user command from a remote distance and transmits the user's command which is input through a remote controller which is separated/spaced from the display apparatus 100.

The remote control receiver 130 may be implemented as a remote control reception board in which are mounted an IR receiver receiving an IR signal from a remote controller, an LED and an eco sensor adjusts brightness which corresponds to the environment of the display apparatus 100.

The remote control receiver 130, according to an exemplary embodiment, may be structurally separated from the user input 140 which receives a user's command, and may be provided in small size, and is thus less limited in size in the arrangement of the display apparatus 10, and is provided in a desired place therein.

The controller 150 performs control operations for various elements of the display apparatus 100. For example, the controller 150 controls the image processor 110 to process an image, controls the display 120 to display the processed image thereon, receives and transmits signals/information/data through the signal input/output, performs a control operation which corresponds to a command from the remote control receiver 130 and the user input 140 to thereby control overall operations of the display apparatus 100. The controller 150 is provided in the board 160 (to be described later).

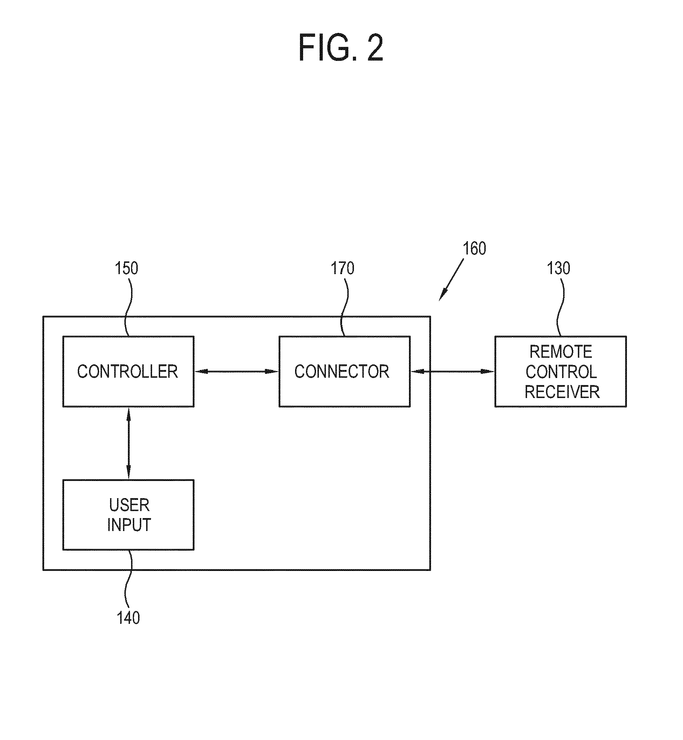

As shown in FIGS. 1 and 2, the board 160 is formed by mounting various chipsets, memories, electronic parts, wirings, etc. of the display apparatus 100 in a printed circuit board (PCB).

According to an exemplary embodiment, the controller 150, which controls the overall operations of the display apparatus 100 and the user input 140 which is used to input a user's command, are provided on the board 160.

Thus, an additional PCB which includes the user input unit 140 is not needed, and an element such as a harness is not needed to connect a main board in which the user input 140 and the controller 150 are mounted. This may reduce the number of parts, reduce manufacturing cost and improve productivity.

The board 160 may include a connector 170 to which the remote control receiver 130 is connected. A user's command which is received by the remote control receiver 130 through the connector 170 may be transmitted to the controller 150 provided in the board 160.

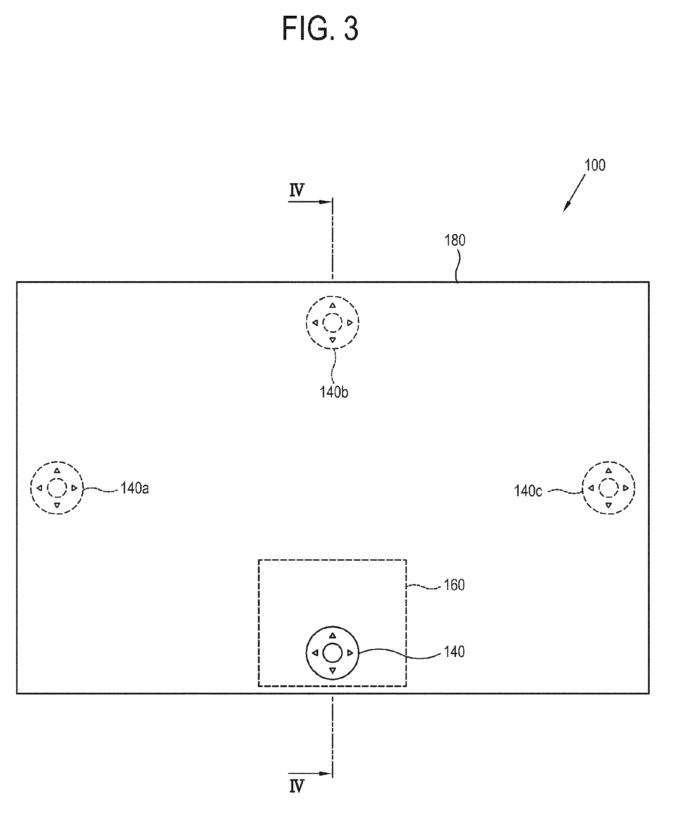

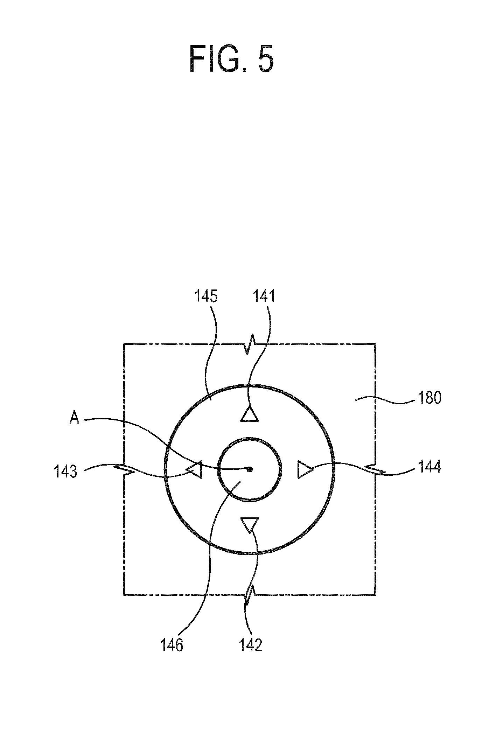

The user input 140 transmits preset various control commands or unlimited information to the controller 110 according to a user's manipulation and input. Referring to FIGS. 3 and 5, a first end of the user input 140, according to an exemplary embodiment, is attached to the board 160. A user manipulation button 145 is provided in a second end of the user input 140 facing the first end attached to the board 160, in order to receive a manipulation from a user.

The display apparatus 100 according to an exemplary embodiment may include a frame 180 which accommodates therein the board 160 including the image processor 110 and the controller 150.

An opening 185 is formed in the frame 180 in a location which corresponds to the user input 140, and the user manipulation button 145 of the user input unit 140 is exposed to the outside of the frame 180 through the opening 185.

As shown in FIG. 3, the locations of the opening 185 and the corresponding user input 140 may be provided in a bottom of the frame 180, but is not limited thereto. Alternatively, the opening 185 and the user input unit 140 may be provided in an upper part 140, or left and/or right sides 140a and 140c of the frame 180.

The user input 140 according to an exemplary embodiment may have a central axis A of the user manipulation button 145 which is perpendicular to the board 160 or to the frame 180.

The frame 180 includes a bezel (not shown) which surrounds the display 120 which displays an image thereon, and the user input 140 may be provided in a predetermined area of the bezel.

As shown in FIG. 5, the user manipulation button 145 may include an enter portion 146 which is located in the center; and up, down, left and right direction keys 141, 142, 143 and 144 which surround the circumference of the enter portion 146.

The enter button 146 and the direction keys 141, 142, 143 and 144 may be pressed in the direction A of the central axis and in a direction which is in parallel with the central axis A. The enter portion 146 and the direction keys 141, 142, 143 and 144 may receive user's various selections such as channel up/down, volume up/down, menu selection and mode selection etc., but is not limited thereto.

A first end of the user input 140 may be attached to the board 160 and the second end having the user manipulation button 145 may rotate in up/down/left/right directions with respect to the central axis A. That is, the user manipulation button 145 is rotated up/down/left/right in response to actuation of the up/down/left/right direction keys 141, 42, 43 and 144 in order to receive a user input regarding channel up/down, volume up/down, menu selection and mode selection, which correspond to such rotation.

In the display apparatus 100 according to an exemplary embodiment, a user's command may be transmitted to the controller 150 through a touch screen which is integrally formed in the display 120, as well as through the user input 140 provided on the board 160.

As described above, according to an exemplary embodiment, the IR module and the function module are separated and the function module is provided in the main board of the display apparatus to thereby reduce the number of parts and manufacturing costs and improve productivity.

Also, as the IR module and the function module are separated, the IR module is provided in a small size and the display apparatus may be provided in various designs without any structural limitation.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. A display apparatus comprising:
an image processor arranged to processe an image signal;
a display arranged to display the processed image signal;
a remote control receiver arranged to receive a user's command;
a user input arranged to receive a user's selection;
a controller arranged to control the image processor, the display, the remote control receiver and the user input,
wherein the controller and the user input are provided in the same board, and the remote control receiver is connected, through a connector to the board in which the controller is provided.

2. The display apparatus according to claim 1, further comprising a main body frame in which an opening is formed, wherein a first end of the user input is attached to the board and a second end thereof is exposed to the outside of the main body frame through the opening.

3. The display apparatus according to claim 1 or 2, wherein the user input comprises a user manipulation button, and a central axis of the user manipulation button extends perpendicular to the board.

4. The display apparatus according to any one of claims 1 to 3, wherein the remote control receiver comprises at least one of an infrared (IR) receiver, a light emitting diode (LED) and an eco sensor.

5. A board which is usable in a display apparatus, the board comprising:
a user input arranged to receive a user's selection;
a connector which is connected to a remote control receiver arranged to receive a user's command; and
a controller arranged to process and display an image signal, and perform a control operation which corresponds to a user's selection input through the user input and a user's command which is transmitted through the remote control receiver.

6. The board according to claim 5, wherein the user input comprises a user manipulation button, and a central axis of the user manipulation button extends perpendicular to the board.

7. The board according to claim 6, wherein the user manipulation button comprises at least one of channel up/down, volume up/down, menu selection and mode selection functions.
